(19) **Europäisches Patentamt**

**European Patent Office**

**Office européen des brevets**

(11) **EP 1 092 269 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **99939960.3**

(22) Anmeldetag: **28.06.1999**

(51) Int Cl.:
***H04L 7/02*** (2006.01)

(86) Internationale Anmeldenummer:
**PCT/DE1999/001877**

(87) Internationale Veröffentlichungsnummer:
**WO 2000/002315 (13.01.2000 Gazette 2000/02)**

(54) **VERFAHREN ZUR SELEKTIVEN FILTERUNG**

METHOD FOR SELECTIVE FILTERING

PROCEDE DE FILTRAGE SELECTIF

(84) Benannte Vertragsstaaten:
**AT DE FR GB IT**

(30) Priorität: **30.06.1998 DE 19829290**

(43) Veröffentlichungstag der Anmeldung:
**18.04.2001 Patentblatt 2001/16**

(73) Patentinhaber: **Infineon Technologies AG**
**81669 München (DE)**

(72) Erfinder: **SCHÖLLHORN, Peter**
**D-83607 Holzkirchen (DE)**

(74) Vertreter: **Reinhard - Skuhra - Weise & Partner**
**Postfach 44 01 51**
**80750 München (DE)**

(56) Entgegenhaltungen:

• **LAMBRETTE U ET AL: "VARIABLE SAMPLE RATE DIGITAL FEEDBACK NDA TIMING SYNCHRONIZATION" IEEE VEHICULAR TECHNOLOGY CONFERENCE, US, NEW YORK, IEEE, Bd. CONF. 47, Seite 1348-1352 XP000741646 ISBN: 0-7803-3660-7**
• **KIM D ET AL: "DESIGN OF OPTIMAL INTERPOLATION FILTER FOR SYMBOL TIMING RECOVERY" IEEE TRANSACTIONS ON COMMUNICATIONS, US, IEEE INC. NEW YORK, Bd. 45, Nr. 7, Seite 877-884 XP000659440 ISSN: 0090-6778**
• **BUCKET K ET AL: "PERIODIC TIMING ERROR COMPONENTS IN FEEDBACK SYNCHRONIZERS OPERATING ON NONSYNCHRONIZED SIGNAL SAMPLES" IEEE TRANSACTIONS ON COMMUNICATIONS, US, IEEE INC. NEW YORK, Bd. 46, Nr. 6, Seite 747-749 XP000779678 ISSN: 0090-6778**
• **GARDNER F M: "INTERPOLATION IN DIGITAL MODEMS - PART I: FUNDAMENTALS" IEEE TRANSACTIONS ON COMMUNICATIONS, US, IEEE INC. NEW YORK, Bd. 41, Nr. 3, Seite 501-507 XP000372693 ISSN: 0090-6778 in der Anmeldung erwähnt**

## Beschreibung

Die vorliegende Erfindung betrifft ein Verfahren zur selektiven Filterung mit einer Koeffizienten- und Filterberechnungseinheit, einem Phasendetektor, einem Schleifenfilter und einem digitalen Oszillator, wobei diese Einheiten abhängig von zur Filterberechnung herangezogenen Koeffizienten verschiedene selektive Filter nachbilden.

Systeme zum Empfang digitaler Daten benötigen in der Regel eine Einrichtung zur Rückgewinnung des im Signal implizit enthaltenen Datentaktsignals. Dazu gibt es prinzipiell zwei Ansätze: 1. Die Taktregelschleife enthält die Schaltung, die den Abtasttakt des Analog/Digital - Wandlers (ADC) liefert (z.B. VCXO). 2. Das Taktsignal des ADCs ist asynchron zum Datentakt. Eine voll digitale Regelschaltung berechnet durch Interpolation aus den Ausgangswerten des ADCs Abtastwerte in einem Taktraster, das synchron zum Datentakt ist. Es sind Schaltungen bekannt, die diese Aufgabe im Basisband lösen. Die meisten Anwendungen besitzen vor oder nach dem ADC Filter, die das Signal, das verarbeitet werden soll, selektieren, d.h. Nachbarsignale und sonstige Störsignale unterdrücken. Diese Filter sind in der Regel für eine feste Bandbreite bzw. Datenrate optimiert, wie z.B. Oberflächenwellenfilter. An das Filter werden meist hohe Anforderungen bezüglich der Phasenlinearität gestellt, um die Impulsform der Datensignale nicht zu verzerren.

Die grundlegenden Theorien hinsichtlich einer volldigitalen Taktrückgewinnung bei digitalen Modems durch Interpolation sind bereits aus dem Artikel von Floyd M. Gardener "Interpolation in Digital-Modems - Part I: Fundamentals" bekannt. Dieser Artikel erschienen in der Zeitschrift IEEE Transactions on Communications, Vol. 41, Nr. 3, März 1993.

Ein weiterer Lösungsansatz im Stand der Technik besteht darin, vor dem ADC analoge Filter mit steuerbarer Bandbreite einzusetzen. Diese Filter sind aber teuer und insbesondere in CMOS - Technologie schwer auf einem Schaltkreis zu integrieren. Analoge-Filter besitzen prinzipiell Phasenverzerrungen, die mit zusätzlichen Schaltungen reduziert werden müssen. Außerdem muß die Abtastfrequenz des ADCs an die Signalbandbreite angepaßt werden. Ein anderer Ansatz besteht darin, vor der Taktrückgewinnung ein mehrstufiges digitales Selektionsfilter vorzusehen und die Feinjustierung der Abtastfrequenz wieder durch Interpolation durchzuführen. Nach jeder Stufe dieses Filters wird die Abtastrate um einen festen Faktor reduziert. Dieser Ansatz hat den Nachteil, daß für kleine Bandbreiten sehr viele Filterstufen benötigt werden und das Filter damit sehr aufwendig wird. Außerdem führt die feste Stufung dazu, daß nicht alle Störkomponenten unterdrückt werden können, was i.a. zu einer Aufwandserhöhung im nachfolgenden Interpolator führt.

Der hier zunächst gelegene Stand der Technik ergibt sich aus den folgenden Aufsätzen:

LAMBRETTE U ET AL: "VARIABLE SAMPLE RATE DIGITAL FEEDBACK NDA TIMING SYNCHRONIZATION" in IEEE VEHICLAR TECHNOLOGY CONFERENCE, New York, USA, IEEE, Bd. Conf. 47, Seiten 1348 - 1352. Dieser Aufsatz zeigt zwei Algorithmen für digitale Empfänger für die Verarbeitung eines breiteren Bereichs verschiedener Abtastraten. Einer der Algorithmen beruht auch auf einer Filterung der empfangenen Signale vor der Zeitsynchronisation. Dabei wird ein nicht datengestützter, auf digitaler Rückkopplung beruhender Zeitsynchronisationsalgorithmus vorgestellt, der von einer Abtastrate abweichende Symbolraten verarbeiten kann.

Der Aufsatz von D. KIM und anderen: "DESIGN OF OPTIMAL INTERPOLATION FILTER FOR SYMBOL TIMING RECOVERY" in IEEE TRANSACTIONS ON COMMUNICATIONS, IEEE INC: New York, USA Bd. 45, Nr. 7 Seiten 877 - 884, offenbart einen optimierten Interpolationsfilter für die Rückgewinnung des Symbol-Zeittakts in einem digitalen Empfänger, in dem die Abtastrate des eingangsseitigen Analog- Digitalwandlers nicht mit dem Symboltakt des senders synchronisiert ist.

Der Aufsatz von K. BUCKET und anderen "PERIODIC TIMING ERROR COMPONENTS IN FEEDBACK SYNCHRONIZERS OPERATING ON NONSYNCHRONZIED SIGNAL SAMPLES" IEEE TRANSACTIONS ON COMMUNICATIONS, IEEE INC, New York, USA, Bd. 46, Nr. 6, Seiten 747 - 749, zeigt, daß der Synchronisationsfehler, der durch eine Schleife zur Rückgewinnung des Zeittakts bei Detektion nichtsynchronisierter Abtastwerte eines verrauschten Sinussignals periodische Anteile enthält. Diese periodischen Fehler entstehen ausschließlich durch eine nicht ideale Interpolation zwischen den nichtsynchronisierten Abtastwerten des Signals und verschwindet, wenn eine synchronisierte Abtastung erfolgt.

Es ist daher Aufgabe der Erfindung, ein mit geringem Aufwand realisierbares Verfahren zur selektiven Filterung anzugeben.

Erfindungsgemäß wird diese Aufgabe durch ein Verfahren mit den Merkmalen des Anspruchs 1 gelöst.

Die Unteransprüche geben bevorzugte Ausführungsformen der Erfindung an.

Diese Erfindung verwendet als Ansatz ein Filter gemäß der nicht vorveröffentlichten WO-A-00/02311 vom 13.01.2000 (int. AZ.: PCT/DE 99/01878) desselben Erfinders und kombiniert es mit einer Variante einer bekannten Taktrückgewinnungsschaltung mit Interpolationsfilter. Dabei wird der Ansatz, Filterkoeffizienten aus den Koeffizienten eines Prototypfilters abzuleiten, erweitert, um zusätzlich eine für die Interpolation des Datensignals benötigte variable Verzögerung, die i.a. kleiner als die Periodendauer des ADC-Taktsignals sein muß, zu bewerkstelligen. Außerdem wird von der Tatsache Gebrauch gemacht, daß die Filterbandbreite stets proportional zur Datenrate ist, d.h. die Bandbreite und der Dezimationsfaktor des Filters stehen in einem festen Verhältnis zueinander. Qualitativ folgt daraus, daß für die Berechnung eines Ausgangswertes des Filters um so mehr Zeit zur Verfügung steht, je kleiner die Datenrate bzw. die Bandbreite des Filters ist. Andererseits werden zur Berechnung des Ausgangswertes bei kleinerer Bandbreite aber auch mehr Koeffizienten benötigt. Quantitativ bedeutet das, daß unabhängig von der Datenrate bzw. der Filterbandbreite immer dieselbe Anzahl an arithmetischen Operationen pro Sekunde benötigt wird. Eine geeignete Schaltung wird im folgenden beschrieben. Eine aufwandsoptimierte Variante für den Fall, daß der Arbeitstakt der Schaltung höher ist als der Abtasttakt am Filtereingang wird ebenfalls vorgestellt.

Die unten beschriebenen Schaltungen haben zwei Aufgaben zu lösen:

1. Es müssen Tiefpässe mit einer zur Datenrate proportionalen Bandbreite realisiert werden, um benachbarte Signale zu unterdrücken.

2. Es muß durch Interpolation ein zum Datentakt phasensynchrones Ausgangssignal erzeugt werden, da der Abtasttakt des Eingangssignals nicht synchron zum Datentakt ist (freilaufender Oszillator).

Zur Lösung der zweiten Aufgabe wird üblicherweise eine Regelschleife eingesetzt, die aus einem Phasendetektor, einem Schleifenfilter und einem digitalen Oszillator (DTO) besteht. Der Oszillator wird als überlaufender Akkumulator realisiert. Tritt ein Überlauf auf, so wird aus den Abtastwerten des Eingangssignals ein Abtastwert interpoliert, der den Phasendetektor und nachfolgende Schaltungen speist. Im eingeschwungenen Zustand liegt ein Teil dieser interpolierten Werte - wie gewünscht - in der Mitte der Datenimpulse. Meistens besitzt das interpolierte Signal eine Abtastfrequenz, die der doppelten Datenrate (bzw. Symbolrate bei zweidimensionaler Datenübertragung wie z.B. QPSK oder QAM) entspricht. Da die beiden Taktsignale asynchron sind, liegen die Abtastzeitpunkte des zu interpolierenden Signals i.a. zwischen den Abtastzeitpunkten des Eingangssignals. Deshalb wird aus dem Zustand des DTOs nach dem Überlauf ein Signal abgeleitet, das den zeitlichen Abstand des gewünschten Abtastzeitpunktes zum letzten Abtastzeitpunkt des Eingangssignals angibt. Um diesen Betrag muß das Eingangssignal durch das Interpolationsfilter zeitlich verschoben werden.

Die vorliegende Erfindung löst diese Aufgabe dadurch, daß bei der Interpolation der Filterkoeffizienten aus den Koeffizienten eines Prototypen nicht nur die gewünschte Bandbreite berücksichtigt wird, sondern auch die gewünschte zeitliche Verschiebung. Damit ist auch angedeutet, wie die Erfindung die erste Aufgabe löst. Die Bandbreite des dezimierenden Interpolationsfilters muß an die Datenrate angepaßt werden. Dazu kann z.B. das Ausgangssignal des Schleifenfilters verwendet werden. Im eingeschwungenen Zustand ist dieses Signal proportional zur Differenz zwischen der gewünschten Interpolationsrate und der Ruhefrequenz des DTOs. Da diese Ruhefrequenz vorgegeben ist, kann ein Signal gebildet werden, das genau proportional zur gesuchten Bandbreite des Filters ist. In der Regel besitzt das Schleifenfilter einen Integralanteil, dessen Ausgangssignal prinzipiell dieselben Eigenschaften besitzt, gepaart mit dem zusätzlichen Vorteil, daß dieses Signal wesentlich rauschärmer als das Ausgangssignal des Gesamtfilters ist.

Werden für eine Bandbreite fc1 des dezimierenden Interpolationsfilters M1 Koeffizienten zur Berechnung von Ausgangswerten mit der Rate fa1 benötigt, so werden bei der vorgeschlagenen Methode zur Berechnung der Filterkoeffizienten für eine Bandbreite fc2 und eine Ausgangsrate fa2 = fa1 * fc2/fc1 nun M2 = M1 * fc1/fc2 Koeffizienten benötigt. Daraus folgt, daß in beiden Fällen dieselbe Verarbeitungsgeschwindigkeit benötigt wird, da fa1*M1 = fa2*M2 ist. Daraus folgt, daß es prinzipiell möglich ist, die Filterberechnung unabhängig von der Datenrate stets mit derselben Anzahl an Arithmetikelementen durchzuführen.

Der Prototyp wird für eine Bandbreite fc bei einer Abtastfrequenz fa dimensioniert. Die beiden Kennfrequenzen sind im Prinzip beliebig, im Einzelfall muß fc aber so klein gewählt werden, daß unter Berücksichtigung der gewählten Methode zur Interpolation der Koeffizienten den Genauigkeitsanforderungen der jeweiligen Anwendung Rechnung getragen wird. Soll das dezimierende Interpolationsfilter eine Bandbreite fc2 - passend zur Abtastrate fa2 nach der Dezimation - besitzen und bei einer Abtastfrequenz fa1 betrieben werden, so ergibt sich ein "Dehnungsfaktor" d = (fc2/fc)*(fa/fa1), d.h. das Abtastraster des Prototypen muß um den Faktor d "gedehnt" werden.

Sollen die Abtastwerte des Datensignals mit der Abtastfrequenz fa2 interpoliert werden, so muß der DTO der Regelschleife mit dem Inkrement $\Delta l = fa2/fa1$ betrieben werden ($\Delta l$ wird vom DTO geliefert, siehe oben). Dabei wird angenommen, daß der DTO mit der Abtastfrequenz fa1 betrieben wird und beim Wert 1 überläuft (d.h. die Ausgangswerte des DTOs liegen zwischen 0 und 1). Der Ausgangswert 10 nach dem Überlauf kann maximal den Wert $\Delta l$ aufweisen.

Es gelte die Definition:
Die Koeffizienten des Prototypen sitzen an Stellen t = n mit n = 0, 1, usw..

Daraus folgt:
Die zu interpolierenden Koeffizienten des benötigten Filters sitzen an den Stellen t = $\Delta t$ + k*d mit k = 0, 1, usw., wobei der Wert $\Delta t$ von der Regelschleife festgelegt wird. Der Term k*d kann umgeformt werden in k*$\Delta l$*(fa/fc)* (fc2/fa2) = k*$\Delta l$*r, wobei r ein konstanter Faktor ist (fa/fc wird beim Entwurf des Prototypen festgelegt und fc2/fa2 ist problembedingt eine Konstante). Daraus folgt ebenso t = $\Delta t$ + k*d = (10 + k*$\Delta l$)*r, wobei l0 + k*$\Delta l$ - abgesehen von Rauschtermen - die Ausgangswerte des DTO im eingeschwungenen Zustand darstellen. Damit gilt insbesondere $\Delta t$ = l0*r, d.h. der Ausgangswert des DTOs nach einem Überlauf wird, nachdem er mit der Konstante r multipliziert wurde, als Startwert für die Interpolation der Filterkoeffizienten verwendet.

Im folgenden wird die vorliegende Erfindung anhand der in den Zeichnungen dargestellten Ausführungsbeispielen näher erläutert. Es zeigt:

Figur 1 ein Prinzipschaltbild für die Trägerrückgewinnung mit dezimierendem Interpolationsfilter;

Figur 2 eine Detaildarstellung des digitalen Oszillators der Fig. 1;

Figur 3 eine kombinierte Einheit zur Berechnung sowohl der Filterkoeffizienten als auch der Filterausgangswerte;

Figur 4 eine Detaildarstellung einer Arithmetikeinheit der Fig. 3;

Figur 5 eine Detaildarstellung einer MAC-Einheit der Fig. 4;

Figur 6 eine modifizierte Arithmetikeinheit für den Fall, daß mindestens N Arbeitstakte pro Takt des Eingangssignals zur Verfügung stehen.

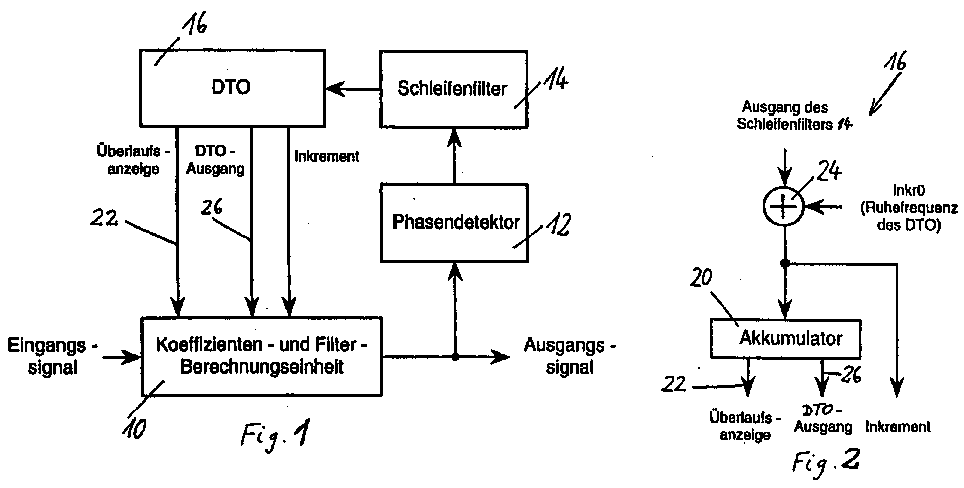

Figur 1 zeigt ein Prinzipschaltbild der Trägerrückgewinnung mit dezimierendem Interpolationsfilter. Es ist die Regelschleife zur Taktrückgewinnung dargestellt, die aus einer Koeffizienten- und Filterberechnungseinheit 10, einem Phasendetektor 12, einem Schleifenfilter 14 und einem digitalen Oszillator 16 besteht. Die Eingangssignale werden dabei der Koeffizienten- und Filterberechnungseinheit 10 zugeführt, die aus diesen Eingangssignalen die Ausgangssignale errechnet. Die Ausgangssignale werden nicht nur dem Ausgang, sondern auch dem Phasendetektor 12 zugeführt, der wiederum mit dem Schleifenfilter 14 verbunden ist. Der Ausgang des Schleifenfilters 14 wird dem digitalen Oszillator 16 zugeführt. Der digitale Oszillator 16 gibt die Signale "DTO-Ausgang", "Überlaufsanzeige" und "Inkrement" zur Steuerung der Koeffizienten- und Filterberechnungseinheit 10 an diese aus.

Figur 2 zeigt eine Detaildarstellung des digitalen Oszillators 16 (DTO).

Der DTO 16 besteht im Kern aus einem Akkumulator 20 mit Überlauf ("wrap around", sägezahnförmiges Ausgangssignal). Dieser Akkumulator 20 wird von einem Inkrement gespeist, das durch Addition des Ausgangssignals des Schleifenfilters 14 mit einem Wert Inkr0 gebildet wird. Der Wert Inkr0 legt dabei die sog. Ruhefrequenz des DTOs 16 fest. Das DTO-Inkrement wird an die Koeffizientenberechnungseinheit 10 weitergereicht. (Hier kann auch der Wert Inkr0 + Integralanteil des Ausgangssignals des Schleifenfilters ausgegeben werden). Weiter wird bei jedem Akkumulator - Überlauf eine neue Berechnung eines Filterausgangswertes durch die Überlaufsanzeige 22 des Akkumulators 20 angestoßen.

Im übrigen umfaßt der DTO 16 eine Summiereinheit 24, in der der Ausgang des Schleifenfilters 14 und der Wert Inkr0 addiert werden. Am Ausgang dieses Addierers 24 kann der Wert "Inkrement", der der aktuellen Summe des Ausgangs des Schleifenfilters 14 mit dem Wert Inkr0 entspricht, entnommen werden. Der Inhalt des Akkumulators 20 steht am DTO-Ausgang 26 zur Verfügung.

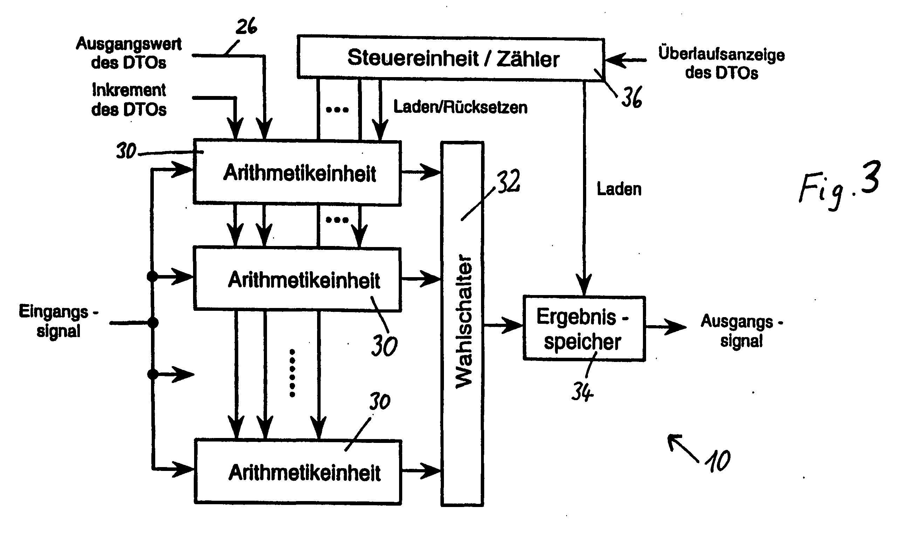

Figur 3 zeigt die Koeffizienten- und Filterberechnungseinheit 10, die zur Berechnung der Filterausgangswerte dient, im Detail.

Das Eingangssignal speist mehrere parallel arbeitende Arithmetikeinheiten 30. Jede dieser Einheiten 30 berechnet einen zukünftigen Ausgangswert des Filters. Die Anzahl N der benötigten Einheiten 30 wird durch die Anzahl der Koeffizienten des Prototypfilters festgelegt (N $\geq$ 1/r*(Anzahl der Koeffizienten des Prototypfilters) und N ganzzahlig). Wird ein DTO-überlauf signalisiert, wird der Ausgangswert derjenigen Arithmetikeinheit 30, die zu diesem Zeitpunkt die Filterberechnung bereits beendet hat, über einen Wahlschalter 32 in den Ergebnisspeicher 34 kopiert. Anschließend wird diese Arithmetikeinheit 30 initialisiert. Die Steuereinheit 36 besitzt im Kern einen "modulo-Zähler", der zyklisch die Arithmetikeinheiten 30 adressiert. Dieser Zähler wird mit jedem DTO-Überlauf inkrementiert.

Der Aufbau der Koeffizienten- und Filterberechnungseinheit 10 ist also folgendermaßen: Das Eingangssignal wird allen N Arithmetikeinheiten 30 zugeführt. Ebenso wird allen diesen Einheiten der Ausgangswert 26 des DTOs 16 und dessen Inkrement-Signal zugeführt. Zusätzlich ist eine Steuereinheit mit einem "modulo-Zähler" vorgesehen, die N Ausgänge aufweist, von denen jeder selektiv mit einer der Arithmetikeinheiten verbunden ist. Der Zähler in dieser Steuereinheit 36 wird mit der Überlaufsanzeige des DTOs 16 weitergezählt. Gleichzeitig wird bei jedem Überlauf der Befehl "laden" für den Ergebnisspeicher ausgegeben.

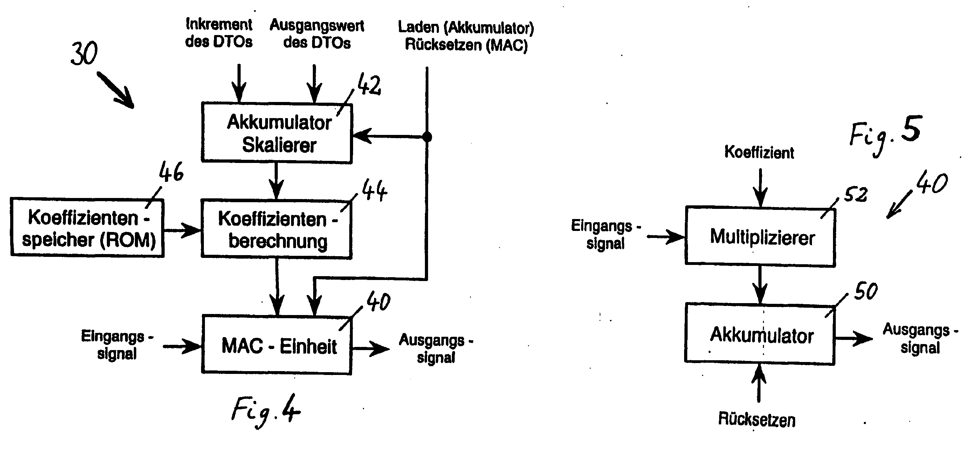

Figur 4 zeigt die Arithmetikeinheit 30 im Detail.

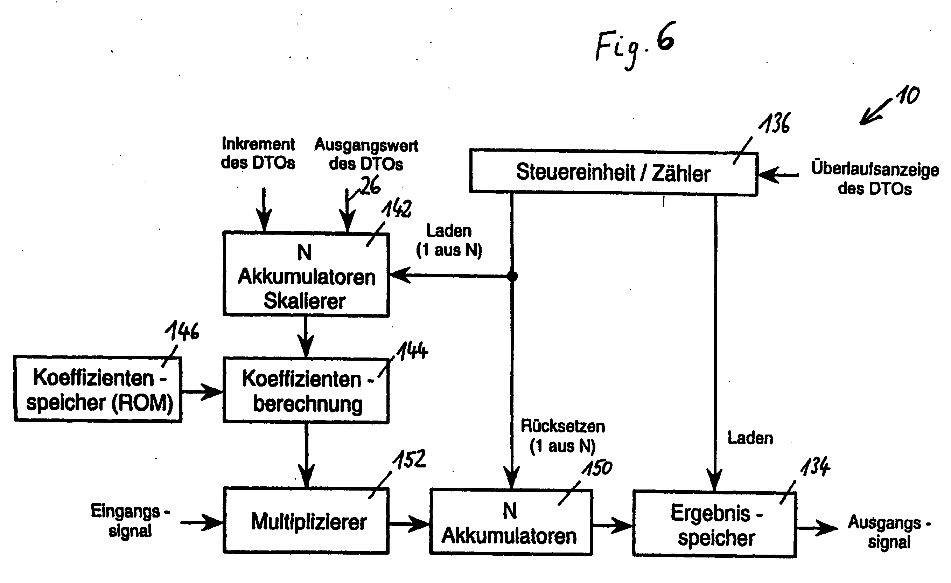

Die Arithmetikeinheit 30 umfaßt eine MAC-Einheit 40, wie sie in Fig. 5 näher dargestellt ist. Diese MAC-Einheit 40 wird mit dem Eingangssignal gespeist und liefert daraus ein Ausgangssignal an den Wahlschalter 32. Weiter besitzt diese Arithmetikeinheit 30 einen Akkumulator mit Skalierer, der die Werte Inkrement des DTO 16 und Ausgangswert 26 des DTO 16 zwischenspeichert und skaliert. Diese Werte werden dann einer Koeffizienten-Berechnungseinheit 44 zugeführt, die die Koeffizienten für die MAC-Einheit 40 liefert. Zu diesem Zweck ist die Koeffizienten-Berechnungseinheit 44 mit einem Koeffizientenspeicher 46 verbunden, aus dem jeweils die entsprechenden Koeffizientenwerte für den Prototypfilter' ausgelesen werden können.

Der Aufbau der MAC-Einheit 40 ist in Fig. 5 detailliert dargestellt. Die MAC-Einheit 40 umfaßt einen Multiplizierer 52, dem das Eingangssignal und der entsprechende Koeffizient von der Koeffizienten-Berechnungseinheit 44 zugeführt werden. Der Ausgangswert des Multiplizierers wird in dem Akkumulator 50 gespeichert. Dadurch stellt der Akkumulator 50 permanent das Ausgangssignal zur Verfügung, welches dann dem Wahlschalter 32 zugeführt wird. Durch den Selektier/Initialisier-Befehl von der Steuereinheit 36 wird der Akkumulator 50 zurückgesetzt.

Die Arithmetikeinheit 30 funktioniert also folgendermaßen:

Wird die Arithmetikeinheit 30 von der Steuereinheit 36 selektiert, wird 1. der Akkumulator 50 der MAC-Einheit 40 zurückgesetzt, 2. wird der Akkumulator 42 vor der Koeffizientenberechnungseinheit 44 mit dem momentanen Ausgangswert 26 des DTOs 16 (Wert nach dem Überlauf) geladen, 3. wird der momentane Inkrementwert des DTOs 16 gespeichert. Nach der Initialisierung wird dieses Inkrement bei jedem Abtasttakt des Eingangssignals akkumuliert.

Der Ausgangswert des Akkumulators 42 wird bei jedem Eingangstakt mit dem Wert "r" skaliert. Das Ergebnis definiert die Position, an der ein Koeffizient aus den Koeffizienten des Prototypfilters interpoliert werden muß (die Interpolationsmethode ist prinzipiell beliebig). Der berechnete Koeffizient wird mit dem aktuellen Filtereingangswert multipliziert und anschließend akkumuliert.

Die Figur 6 zeigt eine modifizierte Ausführungsform der Erfindung, die dann eingesetzt werden kann, wenn mindestens N Arbeitstakte pro Takt des Eingangssignals zur Verfügung stehen. In diesem Fall werden nicht N Arithmetikeinheiten 30 benötigt, sondern es genügt ein einziger Multiplizierer 152 sowie eine einzige Einheit 144 zur Berechnung der Filterkoeffizienten (inklusive ROM 146 und Skalierer).

Die Figur 6 zeigt also eine modifizierte Koeffizienten- und Filterberechnungseinheit 10, die ebenso wie die vorher in den Figuren 2 bis 5 beschriebene Koeffizienten- und Filterberechnungseinheit 10 an der entsprechenden Stelle in Figur 1 eingesetzt werden kann. Hier wird das Eingangssignal nur einem einzigen Multiplizierer 152 zugeführt, von dort jedoch auf N Akkumulatoren 150 selektiv verteilt, und von diesen wiederum dem Ergebnisspeicher 134 zugeführt. Der Ergebnisspeicher 134 enthält dann stets das Ausgangssignal. Auch hier ist eine Steuereinheit 136 vorgesehen, die mit der überlaufsanzeige des DTOs 16 verbunden ist, und einen "modulo-Zähler" zur Ansteuerung der N Akkumulatoren 150 umfaßt. Auch hier wird der Multiplizierer 152 von der Koeffizienten-Berechnungseinheit 144 angesteuert, die wiederum die Werte der Prototyp-Koeffizienten aus dem ROM-Speicher 146 ausliest. Zusätzlich sind N Akkumulatoren 142 vorgesehen, die N verschiedene Werte für das Inkrement des DTOs 16 und den Ausgangswert 26 des DTOs 16 speichern. Auch diese Akkumulatoren erhalten ihren Ladebefehl selektiv aus der Steuereinheit 136.

Die Einheit wird zyklisch von einem der N Akkumulatoren angesteuert. Die N Akkumulatoren hinter dem Multiplizierer können zu einer Schaltung zusammengefaßt werden, die einen Addierer und N Speicherzellen enthält.

**Patentansprüche**

1. Verfahren zur selektiven Filterung mit einer Koeffizienten- und Filterberechnungseinheit (10) einem Phasendetektor (12), einem Schleifenfilter (14) und einem digitalen Oszillator (16) wobei diese Einheiten (10, 12, 14, 16) abhängig von zur Filterberechnung herangezogenen Koeffizienten h1(n), h2(t) verschiedene selektive Filter nachbilden, **gekennzeichnet durch** folgende Verfahrensschritte

    a) es werden die Koeffizienten h1(n) eines Prototyps eines weiteren selektiven Filters mit einer charakteristischen Frequenz fc für eine gegebene Abtastfrequenz fa vorgegeben oder berechnet;
    b) aus den Koeffizienten h1(n) werden Koeffizienten h2(t) des weiteren selektiven Filters mit der charakteristischen Frequenz fc2 an Stellen $t_k = \Delta t + k*d$ mit $k = 0,1,...$ berechnet, das mit einer Abtastrate $fa_1$ betrieben werden soll, indem die Werte der zeitkontinuierlichen Impulsantwort h(t) der Nachbildung dieses weiteren selektiven Filters an diesen Stellen $t_k$ interpoliert werden,

    wobei $d = \dfrac{fc2 * fa}{fc * fa_1};$

    c) die Einheiten bilden mit den neuen Koeffizienten h2(t)das weitere selektive Filter nach, welches bei der Abtastrate $fa_1$ betrieben wird.

2. Verfahren nach Anspruch 1, **dadurch gekennzeichnet, daß** die Ausgangswerte des digitalen Oszillators (16) 10 + k* $\Delta$l zur Berechnung von $\Delta$t + k*d herangezogen werden.

3. Verfahren nach Anspruch 1 zur Filterung eines abgetasteten Datensignals, **dadurch gekennzeichnet, daß** für den Startwert $\Delta$t für die Interpolation der neuen Koeffizienten h2(t) der Ausgangswert des digitalen Oszillators (16) nach einem Überlauf 10 multipliziert mit der Konstante $r = \dfrac{fa * fc2}{fc * fa2}$ verwendet wird, wobei fa2 die Abtastfrequenz darstellt, mit der das Datensignal interpoliert wird.

4. Verfahren nach einem der Ansprüche 1 bis 3, **dadurch gekennzeichnet, daß** als digitaler Oszillator (16) ein überlaufender Akkumulator (20) verwendet wird.

5. Verfahren nach Anspruch 4, **dadurch gekenn-**

**zeichnet, daß** der Akkumulator (20) von einem Inkrement gespeist wird, das durch die Addition des Ausgangssignals des Schleifenfilters (14) mit einem Wert Inkr0 gebildet wird, der die Ruhefrequenz des digitalen Oszillators (16) festlegt.

6. Verfahren nach einem der Ansprüche 1 bis 5, **dadurch gekennzeichnet, daß** ein Eingangssignal mehreren parallel arbeitenden Arithmetikeinheiten (30) zugeführt wird, von denen jede einen zukünftigen Ausgangswert des Filters berechnet, wobei bei einem Überlauf des digitalen Oszillators (16) der Ausgangswert derjenigen Arithmetikeinheit (30) ausgewählt wird, die zu diesem Zeitpunkt die Berechnung bereits beendet hat.

7. Verfahren nach Anspruch 6, **dadurch gekennzeichnet, daß** die Anzahl N der parallel arbeitenden Arithmetikeinheiten (30) aufgrund der Anzahl K der Koeffizienten des jeweils von den Einheiten (10, 12, 14, 16) nachgebildeten selektiven Filters nach folgenden Bedingungen festgelegt wird:

$$N \geq \frac{K \cdot fc \cdot fa2}{fa \cdot fc2}$$

und N ganzzahlig.

8. Verfahren nach Anspruch 6 oder Anspruch 7, **dadurch gekennzeichnet, daß** die Auswahl der Arithmetikeinheiten (30) mittels eines modulo-N-Zählers (36) erfolgt, der die Arithmetikeinheiten (30) zyklisch adressiert, und der mit jedem Überlauf des digitalen Oszillators (16) inkrementiert wird.

9. Verfahren nach Anspruch 8 zur Filterung eines abgetasteten Datensignals, **dadurch gekennzeichnet, daß** jede Arithmetikeinheit (30) einen Akkumulator (42) enthält, der zurückgesetzt wird, wenn die Arithmetikeinheit (30) adressiert wird, und dann mit dem Ausgangswert des digitalen Oszillators (16) nach dem Überlauf geladen wird und der momentane Inkrementwert des digitalen Oszillators (16) gespeichert wird, wobei dieses Inkrement dann bei jedem Abtasttakt des Eingangssignals akkumuliert wird, und der Ausgangswert des Akkumulators (42) bei jedem Eingangtakt mit dem Wert

$$r = \frac{fa \cdot fc2}{fc \cdot fa2}$$

skaliert wird, wobei fa2 die Abtastfrequenz darstellt, mit der das Datensignal interpoliert wird.

10. Verfahren nach Anspruch 9, **dadurch gekenn-**

**zeichnet, daß** der skalierte Ausgangswert des Akkumulators (42) die Position definiert, an der ein neuer Koeffizient h2(t) für den weiteren selektiven Filter aus den Koeffizienten h1(n) des Prototyps interpoliert werden muß.

11. Verfahren nach einem der Ansprüche 1 bis 5, **dadurch gekennzeichnet, daß** lediglich eine Koeffizientenberechnungseinheit (144) vorgesehen ist, die zeitlich sequentiell die Koeffizienten h2(t) berechnet, wobei die Filterausgangswerte dann in einen Multiplizierer (152) zeitlich sequentiell berechnet und auf N Akkumulatoren (150) verteilt und die jeweiligen Eingangswerte d.h. Inkrement und Ausgangswert des digitalen Oszillators (16) selektiv in N weiteren Akkumulatoren (142) abgelegt werden.

## Claims

1. Method for selective filtering with a coefficient and filter calculation unit (10), a phase detector (12), a loop filter (14) and a digital oscillator (16), these units (10, 12, 14, 16) simulating different selective filters depending on coefficients h1(n), h2(t) used for the filter calculation, **characterized by** the following method steps:

   a) the coefficients h1 (n) of a prototype of a further selective filter at a characteristic frequency fc are prescribed or calculated for a given sampling frequency fa;
   b) coefficients h2(t) of the further selective filter at the characteristic frequency fc2 are calculated from the coefficients h1 (n) at points $t_k = \Delta t + k \cdot d$ **where k=0.1,...,** which filter is intended to be operated at a sampling rate $fa_1$, by interpolating the values of the continuous-time impulse response h(t) of the simulation of this further selective filter at these points $t_k$, where

   $$d = \frac{fc2 \cdot fa}{fc \cdot fa_1} \quad ;$$

   c) with the new coefficients h2(t), the units simulate the further selective filter, which is operated at the sampling rate $fa_1$.

2. Method according to Claim 1, **characterized in that** the output values of the digital oscillator (16) I0+k*ΔI are used for calculating Δt+k*d.

3. Method according to Claim 1 for filtering a sampled data signal, **characterized in that** the output value of the digital oscillator (16) after an overflow I0, multiplied by the constant $r = \dfrac{fa * fc2}{fc * fa2}$, is used for the start value $\Delta t$ for the interpolation of the new coefficients h2(t), where fa2 represents the sampling frequency at which the data signal is interpolated.

4. Method according to one of Claims 1 to 3, **characterized in that** an overflowing accumulator (20) is used as the digital oscillator (16).

5. Method according to Claim 4, **characterized in that** the accumulator (20) is fed by an increment formed by adding the output signal of the loop filter (14) to a value Incr0, which defines the idle frequency of the digital oscillator (16).

6. Method according to one of Claims 1 to 5, **characterized in that** an input signal is fed to a plurality of arithmetic units (30) operating in parallel, each of which calculates a future output value of the filter, in which case, in the event of an overflow of the digital oscillator (16), the output value of that arithmetic unit (30) which has already finished the calculation at this point in time is selected.

7. Method according to Claim 6, **characterized in that** the number N of arithmetic units (30) operating in parallel is defined, on the basis of the number K of coefficients of the selective filter simulated in each case by the units (10, 12, 14, 16), according to the following conditions:

$$N \geq \frac{K \cdot fc \cdot fa2}{fa \cdot fc2}$$

and N is an integer.

8. Method according to Claim 6 or 7, **characterized in that** the arithmetic units (30) are selected by means of a modulo-N counter (36), which cyclically addresses the arithmetic units (30) and is incremented with each overflow of the digital oscillator (16).

9. Method according to Claim 8 for filtering a sampled data signal, **characterized in that** each arithmetic unit (30) contains an accumulator (42) which is reset if the arithmetic unit (30) is addressed, and is then loaded with the output value of the digital oscillator (16) after the overflow, and the instantaneous increment value of the digital oscillator (16) is stored, this increment then being accumulated in the case of each sampling clock of the input signal, whereas the output value of the accumulator (42) is scaled with

the value $r = \dfrac{fa \cdot fc2}{fc \cdot fa2}$ in the case of each input clock, where fa2 represents the sampling frequency at which the data signal is interpolated.

10. Method according to Claim 9, **characterized in that** the scaled output value of the accumulator (42) defines the position at which a new coefficient h2(t) must be interpolated for the further selective filter from the coefficients h1(n) of the prototype.

11. Method according to one of Claims 1 to 5, **characterized in that** only one coefficient calculation unit (144) is provided, which calculates the coefficients h2(t) sequentially in time, the filter output values then being calculated sequentially in time in a multiplier (152) and being split between N accumulators (150) and the respective input values, i.e. increment and output value of the DTO (16), being stored selectively in N further accumulators (142).

## Revendications

1. Procédé pour le filtrage sélectif ayant une unité de calcul de coefficients et de filtre (10), un détecteur de phase (12), un filtre de boucle (14) et un oscillateur numérique (16), ces unités (10, 12, 14, 16) simulant différents filtres sélectifs en fonction de coefficients h1(n), h2(t) pris en compte pour le calcul de filtre, **caractérisé par** les étapes de procédé suivantes :

   a) les coefficients h1(n) d'un prototype d'un filtre sélectif supplémentaire avec une fréquence caractéristique fc pour une fréquence d'échantillonnage donnée fa sont fixés ou calculés;
   b) à partir des coefficients h1(n), des coefficients h2(t) du filtre sélectif supplémentaire avec la fréquence caractéristique fc2 à des positions $t_k = \Delta t + k*d$ avec k=0,1,..., sont calculés, ceci devant fonctionner avec une fréquence d'échantillonnage $fa_1$, les valeurs de la réponse d'impulsion h(t), continue dans le temps, de la simulation de ce filtre sélectif supplémentaire étant interpolées à ces positions $t_k$, avec

   $$d = \frac{fc2 * fa}{fc * fa_1} \quad;$$

   c) les unités simulent avec les nouveaux coefficients h2(t) le filtre sélectif supplémentaire, qui fonctionne à la fréquence d'échantillonnage $fa_1$.

2. Procédé selon la revendication 1, **caractérisé en ce que** les valeurs de sortie de l'oscillateur numérique (16) $I_o + k*\Delta I$ sont prises en compte pour le calcul de Δt+k*d.

**3.** Procédé selon la revendication 1 pour le filtrage d'un signal de données échantillonné, **caractérisé en ce que** pour la valeur de départ Δt pour l'interpolation des nouveaux coefficients h2(t), la valeur de sortie de l'oscillateur numérique (16) après un débordement $I_0$ multipliée avec la constante $r = \dfrac{fa * fc2}{fc * fa2}$ est utilisée, fa2 représentant la fréquence d'échantillonnage avec laquelle le signal de données est interpolé.

**4.** Procédé selon une des revendications 1 à 3, **caractérisé en ce qu'** un accumulateur à débordement (20) est utilisée comme oscillateur numérique (16).

**5.** Procédé selon la revendication 4, **caractérisé en ce que** l'accumulateur (20) est alimenté par un incrément, qui est formé par l'addition du signal de sortie du filtre de boucle (14) avec une valeur Inkr0, qui fixe la fréquence de repos de l'oscillateur numérique (16).

**6.** Procédé selon une des revendications 1 à 5 **caractérisé en ce qu'**un signal d'entrée est fourni à plusieurs unités arithmétiques (30) travaillant en parallèle, et dont chacune calcule une valeur de sortie future du filtre, et lors d'un débordement de l'oscillateur numérique (16), la valeur de sortie de l'unité arithmétique (30) qui a déjà, à cet instant, terminé le calcul, est choisie.

**7.** Procédé selon la revendication 6, **caractérisé en ce que** le nombre N d'unités arithmétiques (30) travaillant en parallèle est fixé sur la base du nombre K de coefficients du filtre sélectif respectif simulé par les unités (10, 12, 14, 16) selon les conditions suivantes :

$$N \geq \frac{K \cdot fc \cdot fa2}{fa \cdot fc2}$$

et N entier.

**8.** Procédé selon la revendication 6 ou 7, **caractérisé en ce que** le choix des unités arithmétiques (30) a lieu à l'aide d'un compteur modulo N (36) qui adresse les unités arithmétiques (30) de façon cyclique et qui est incrémenté avec chaque débordement de l'oscillateur numérique (16).

**9.** Procédé selon la revendication 8 pour le filtrage d'un signal de données échantillonné, **caractérisé en ce que** chaque unité arithmétique (30) contient un accumulateur (42) qui est réinitialisé lorsque l'unité arithmétique (30) est adressée, puis qui est chargé avec la valeur de sortie de l'oscillateur numérique (16) après le débordement et la valeur d'incrément courante de l'oscillateur numérique (16) est mémorisée, cet incrément étant ensuite accumulé lors de chaque cycle d'échantillonnage du signal d'entrée, et la valeur de sortie de l'accumulateur (42) est réglée lors de chaque cycle d'entrée avec la valeur $r = \dfrac{fa \cdot fc2}{fc \cdot fa2}$, fa2 représentant la fréquence d'échantillonnage avec laquelle le signal de données est interpolé.

**10.** Procédé selon la revendication 9, **caractérisé en ce que** la valeur de sortie réglée de l'accumulateur (42) définie la position à laquelle un nouveau coefficient h2(t) doit être interpolé à partir des coefficients h1(n) du prototype pour le filtre sélectif supplémentaire.

**11.** Procédé selon une des revendications 1 à 5, **caractérisé en ce que** seulement une unité de calcul de coefficients (144) est prévue qui calcule séquentiellement dans le temps les coefficients h2(t), les valeurs de sortie du filtre étant ensuite calculées séquentiellement dans le temps dans un multiplieur (152) et réparties sur N accumulateurs (150) et les valeurs d'entrée respectives, c'est-à-dire incrément et valeur de sortie de l'oscillateur numérique (16), étant stockées de façon sélective dans N accumulateurs supplémentaires (142).

Fig. 2

Fig. 1

Fig. 3

Überlaufanzeige des DTOs

Steuereinheit / Zähler

36

Laden

Ergebnis - speicher

34

Laden/Rücksetzen

32

Wahlschalter

Ausgangs - signal

Arithmetikeinheit

Arithmetikeinheit

30

30

Arithmetikeinheit

30

Ausgangswert des DTOs

26

Inkrement des DTOs

30

Eingangs - signal

10

Inkrement
des DTOs

Ausgangswert
des DTOs

Laden (Akkumulator)
Rücksetzen (MAC)

30

42

**Akkumulator
Skalierer**

46

**Koeffizienten -
speicher (ROM)**

44

**Koeffizienten -
berechnung**

Eingangs -
signal

40

**MAC - Einheit**

Ausgangs -
signal

Fig.4

Fig. 5

Koeffizient

52

40

Eingangs -
signal

**Multiplizierer**

50

**Akkumulator**

Ausgangs -
signal

Rücksetzen

EP 1 092 269 B1

**Fig. 6**

EP 1 092 269 B1